# EUROPÄISCHE PATENTSCHRIFT

(11) **EP 1 183 415 B1**
(45) Veröffentlichungstag und Bekanntmachung des Hinweises auf die Patenterteilung: **10.09.2003**
(21) Anmeldenummer: 00931237.2
(22) Anmeldetag: 16.05.2000
(51) Int. Cl.: D06F 37/30

(54) **ANTRIEBSVORRICHTUNG FÜR EINE WASCHMASCHINE**
DRIVE DEVICE FOR A WASHING MACHINE
DISPOSITIF D'ENTRAINEMENT POUR MACHINE A LAVER

(30) Priorität: 17.05.1999 DE 19922610
(43) Veröffentlichungstag der Anmeldung: 06.03.2002
(73) Patentinhaber: BSH Bosch und Siemens Hausgeräte GmbH, 81669 München (DE)
(72) Erfinder: HEYDER, Reinhard, D-13403 Berlin (DE); SKRIPPEK, Jörg, D-14641 Berlin (DE)
(86) Internationale Anmeldenummer: EP0004443
(87) Internationale Veröffentlichungsnummer: WO00070139

(56) Entgegenhaltungen:
- EP-A- 0 780 507
- DE-A- 19 724 930

## Beschreibung

Die Erfindung bezieht sich auf eine Antriebsvorrichtung für eine Waschmaschine mit einer über Lager entweder in der Rückwand oder innerhalb eines an der Rückwand eines Laugenbehälters angebrachten steifen Tragteils über eine wenigstens annähernd horizontal liegende Welle fliegend gelagerten Wäschetrommel, die durch einen an der Rückseite des Laugenbehälters an dem Tragteil befestigten flachen Elektromotor direkt angetrieben ist, wobei der Ständer und der Läufer des Elektromotors über eine Lagerung miteinander verbunden und gemeinsam aus der Waschmaschine herausnehmbar sind.

Aus der DE 195 47 745 A1 ist eine derartige Antriebsvorrichtung für eine von vorn beschickbare Waschmaschine bekannt, die einen als ganzen von der Welle abziehbaren Elektromotor aufweist. Dabei übt der Ständer in Verbindung mit einer Montagescheibe auch die Funktion des Tragteils aus. An dem Ständer ist eine Lagerhülse als Flansch ausgebildet und bildet Lagersitze für Wälzlager der von einer Hohlwelle umgebenen Welle der Wäschetrommel. Die Hohlwelle ist ihrerseits an dem freien Ende der Welle mittels einer Schraubverbindung befestigt. Die Hohlwelle ist Bestandteil des im wesentlichen als glockenförmiger Flansch ausgebildeten Rotors, der auf der Innenumfangsseite des glockenförmigen Ansatzes magnetisierbare Pol trägt. Durch Lösen der Befestigungssschrauben, die den Ständer mit der Montagescheibe verbinden, und der zentralen Schraubverbindung zwischen der Hohlwelle und der Welle lassen sich Stator und Rotor gemeinsam von der Rückseite des Laugenbehälters abziehen, wobei die Lagerung zwischen dem Stator und dem Rotor, die gleichzeitig die Lagerung der Welle bildet, zwischen dem Stator und dem Rotor verbleibt. Dies hat zur Folge, daß nach Entfernen des Ständers und des Läufers die Welle zusammen mit der Wäschetrommel ohne Lagerung in der Waschmaschine verbleibt und beim Wiedereinbau des Elektromotors erneut bezüglich des Ständers justiert werden muß. Dies erschwert den Zusammenbau.

Es ist die Aufgabe der Erfindung, die eingangs bezeichnete Antriebseinrichtung derart zu verbessern, daß sich der Elektromotor einfacher und schneller von der Rückwand des Laugenbehälters abnehmen läßt und der Wiedereinbau vereinfacht wird.

Diese Aufgabe wird erfindungsgemäß dadurch gelöst, daß die Welle über Lager entweder in der Rückwand oder innerhalb eines an der Rückwand angebrachten steifen Tragteils gelagert ist und einen aus der Rückwand des Laugenbehälters bzw. dem Tragteil herausragenden Wellenzapfen aufweist, der von einer von dem Läufer des Motors ausgebildeten Hohlwelle umgeben ist und auf den der Ständer und der Läufer des Elektromotors gemeinsam aufschiebbar sind.

Durch die Erfindung wird einerseits gewährleistet, daß die Welle in der Rückwand oder in dem Tragteil sicher gelagert ist, und andererseits, daß sich der Motor als ganzer von der Welle abziehen läßt. Auch dann, wenn der Motor abgezogen ist, verbleibt die Lagerung der Welle in der Waschmaschine, so daß die Wäschetrommel auch nach dem Entfernen des Motors noch drehbar ist.

Da der Motor als ganzer fertig montiert in das Herstellerwerk für Waschmaschinen geliefert wird, läßt er sich dort leicht mit dem Laugenbehältersystem über das Tragteil komplettieren. Da an die Einhaltung eines kleinen und bei jedem Exemplar möglichst immer gleich großen Luftspalts zwischen dem Ständer und den Läuferpolen eines Elektromotors sowie an die zentrale Lagerung äußerst hohe Anforderungen gestellt werden, die bei einer Montage in einer Waschmaschinenfabrik nicht zu erfüllen sind, wird erfindungsgemäß ein Motor fertig komplett zur Verfügung gestellt, der sich leicht auf das Ende eines Wellenzapfens der Welle der Wäschetrommel aufschieben läßt, wobei der Ständer des Motors mit dem Tragteil verbunden wird, beispielsweise durch Schraubverbindungen.

Um den Ständer mit dem Tragteil verschrauben zu können, weist der Läufer in seinem Bodenteil Durchbrüche auf, die eine Kühlung der Ständerwicklungen gewährleisten, so daß sich der Motor bei anforderungsgerechter Dimensionierung nicht überhitzen kann.

Der Motor hat somit eine offene Bauform, deren wärmeerzeugende Bauteile von allen Seiten durch die Umgebungsluft gekühlt werden. Selbst die geringe Motordrehzahl beim Waschbetrieb reicht dann noch dazu aus, daß der Läufer eine wärmeabführende Luftbewegung erzeugt.

Auf diese Weise kann der Motor komplett im Werk eines Motorlieferanten zusammengebaut werden und anschließend an die Waschmaschinen-Fabriken geliefert werden, ohne daß Fertigungstoleranzen in dem Waschmaschinenwerk negativen Einfluß auf den Elektromotor haben. Der Ständer wird über eine Mehrzahl von Schrauben mit dem Gußtragstern verbunden, der üblicherweise an der Rückwand des Laugenbehälters angeordnet ist, wobei zusätzlich auch noch Verbindungen zwischen der Rückwand oder der Mantelwand des Laugenbehälters und dem Ständer vorgesehen werden können, um diesen zusätzlich zu sichern.

Gemäß einer vorteilhaften Weiterbildung der Erfindung bildet eines der beiden Lager der Welle gleichzeitig das Lager zwischen dem Ständer und dem Läufer, wobei dieses Lager zwischen dem sich an die Welle anschließenden Wellenzapfen und der den Läufer umgebenden Hohlwelle angeordnet ist. In diesem Fall ist das den Ständer mit dem Läufer verbindende Lager genauso dimensioniert wie das Lager, über das die Welle in der von dem Tragteil gebildeten Lagerhülse gelagert ist.

Vorteilhaft liegt das den Läufer in dem Ständer lagernde Lager axial an der von dem Laugenbehälter wegweisenden Stirnseite der Lagerhülse des Tragteils an, wobei zusätzlich die Lagerhülse des Ständers, die das zwischen dem Ständer und dem Läufer angeordnete Lager aufnimmt, auf den äußeren Umfang der Lagerhülse des Tragteils aufschiebbar oder aufsteckbar angeordnet ist, so daß sich die Stabilität des Motors noch zusätzlich erhöht. Die Befestigung der Lagerhülse des Ständers auf der Lagerhülse des Tragteils im Preßsitz kann auch als einzige Befestigung des Ständers dienen, so daß in diesem Fall die Schraubverbindungen zwischen dem Ständer und dem Tragteil eingespart sind.

Vorteilhaft ist der Motor in einer Ausführungsform der Erfindung als elektronisch kommutierter Gleichstrom-Motor ausgeführt, was wegen des Fehlens von Bürsten eine hohe Lebensdauer ermöglicht In einer besonders vorteilhaften Weiterbildung der Erfindung ist der Läufer wenigstens teilweise aus einem ringförmigen Paket von Dynamoblechen und darauf angeordneten Dauermagnetsegmenten ausgestattet. Die Dauermagnetsegmente ergeben ein kraftvolles Drehmoment, und die Dynamobleche bilden einen besonders guten, magnetischen Rückfluß. Die Herstellung der erforderlichen Blechpakete ist durch Automatisierung des Stapelverfahrens relativ unkompliziert und kostengünstig. Vorteilhaft sind die Polpakete des Ständers aus Dynamoblechen zusammengesetzt und tragen Spulen mit den Erregerwicklungen.

Zur erleichterten und reproduzierbar genauen Montage kann die zentrierte Verbindung des Läufers drehfest an der Welle durch eine formschlüssige Profilwellen-, Profilnaben-, Paßfeder-, Kegel- oder Keilnutverbindung ergänzt sein.

In einer weiteren, vorteilhaften Ausführungsform ist der Motor als geschalteter Reluktanz-Motor ausgebildet. In diesem Fall besteht der Läufer aus einem ferromagnetisch relativ schlecht leitenden Material. Der Aufbau des Ständers ist mit dem des elektronisch kommutierten Gleichstrommotors vergleichbar. Der Vorteil besteht insbesondere in einer kostengünstigeren Gestaltung des Läufers, die keine teueren Magnetwerkstoffe erfordert.

Anhand der Zeichnungen wird die Erfindung nachstehend in einem Ausführungsfall näher erläutert. es zeigen:
- Fig. 1: eine schematische Darstellung der Rückwand eines Laugenbehälters mit einer Antriebswelle für eine Wäschetrommel und einem auf einen Wellenzapfen der Antriebswelle aufsetzbaren Elektromotor und
- Fig. 2: eine weitere Darstellung der Rückwand eines Laugenbehälters mit einer Antriebswelle für eine Wäschetrommel und einem auf den Wellenzapfen der Antriebswelle aufbringbaren Elektromotor,
wobei sowohl in Fig. 1 als auch in Fig. 2 der Elektromotor auf dem Wellenzapfen der Antriebswelle montiert und gesondert dargestellt ist.

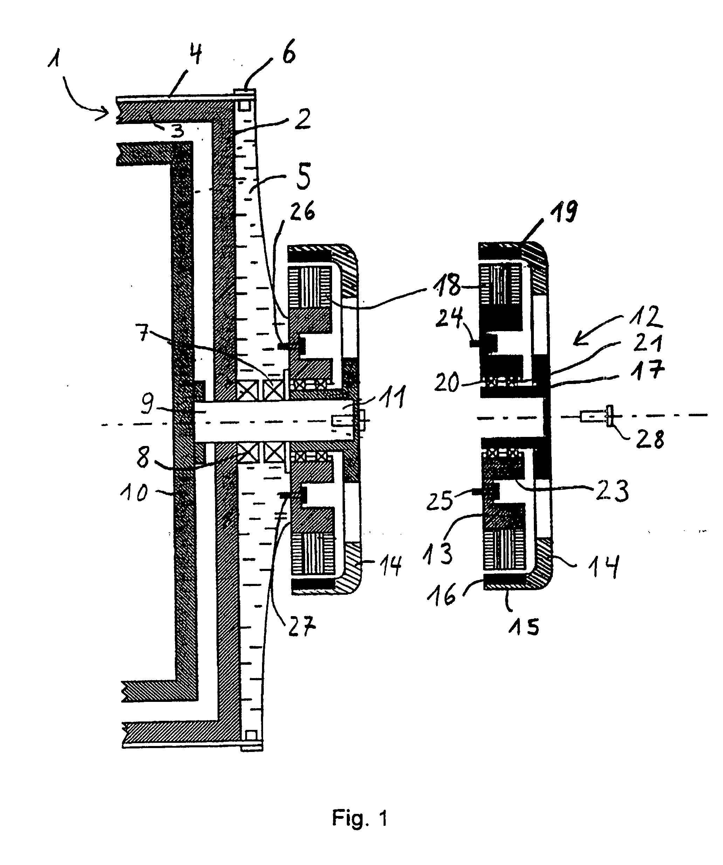

Ein Laugenbehälter 1 (Fig. 1) weist eine Rückwand 2, einen Mantel 3 und eine zusätzliche Manteldecke 4 auf. Über die Manteldecke 4 ist ein Tragteil 5 über Schraubverbindungen 6 mit dem Laugenbehälter 1 verbunden.

Über Lager 7 und 8, beispielsweise Kugel- oder Wälzlager, ist eine Welle 9, d. h. die Antriebswelle einer Waschtrommel 10, in dem Tragteil 5 liegend gelagert. Auf einen Wellenzapfen 11 ist ein Elektromotor 12 aufschiebbar, der sich aus einem Ständer 13 und einem Läufer 14 zusammensetzt. Der Läufer 14 ist glockenförmig ausgebildet und weist auf der Innenseite eines glockenförmigen Flansches 15 Pole 16 auf, die aus Permanentmagneten bestehen und segmentartig am Umfang verteilt sind. Der Läufer 14 weist einen zentralen, ringförmigen Flansch 17 auf, der auf den Wellenzapfen 11 aufschiebbar ist diesen im aufgeschobenen Zustand form- und vorzugsweise auch kraftschlüssig umgibt. Der ringförmige Flansch 17 bildet somit eine Hohlwelle aus.

Durchbrüche 8 im Bodenbereich des glockenförmigen Läufers 14 erlauben den Zutritt von Kühlluft zu von Erregerwicklungen 18 umgebenen Blechpaketen 19 des Ständers 13. Über Kugel- oder Wälzlager 20, 21 ist der Läufer 12 in einem eine ringförmige Lagerhülse ausbildenden Flansch 23 des Ständers 13 gelagert. Der Ständer 13 ist über durch die Durchbrüche 22 zugängliche Schrauben 24, 25 in entsprechenden mit Schraubgewinden versehenen Bohrungen 26, 27 mit dem Tragteil 5 verschraubt.

In entsprechender Weise ist der Läufer 14 über eine zentrale, in eine Bohrung 29 hineingeschraubte Schraube 28 mit dem Wellenzapfen 11 verbunden.

Durch Lösen der Schrauben 24, 25, 28 läßt sich der Motor 12 als ganzer von dem Wellenzapfen 11 abziehen. Das kompakt aufgebaute Tragteil 5 gewährleistet eine hohe Stabilität.

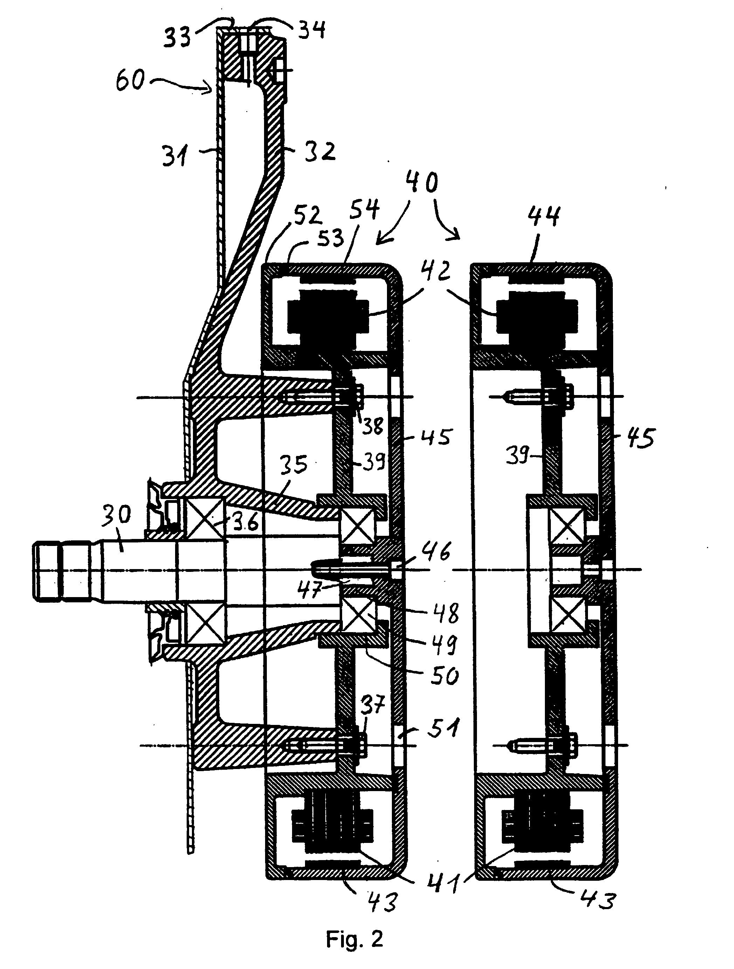

In einem weiteren Ausführungsbeispiel (Fig. 2) ist eine (hier nicht dargestellte) Wäschetrommel über eine Welle 30 fliegend in einem Laugenbehälter 60 gelagert, der eine Rückwand 31 aufweist. Ein Tragstern 32, der beispielsweise strahlförmig ausgebildet ist, ist an der Rückwand 31 befestigt, insbesondere auch an einem seitlichen Bund 33 der Rückwand 31 über eine Schraubverbindung 34. Zur Lagerung der Welle 30 der Wäschetrommel besitzt der Tragstern 32 eine Lagerhülse 35, in der ein Wälz- oder ein Kugellager 36 gelagert ist. Im wesentlichen konzentrisch zu der Lagerhülse 35 erstreckt sich ein ringförmiger Flansch 55, an dem über Befestigungsschrauben 37, 38 ein Ständer 39 eines Elektromotors 40 befestigt ist. Der Ständer 39 ist im wesentlichen tellerförmig; er trägt auf seinem äußeren Bund Blechpakete 41, die von Erregerwicklungen 42 umgeben sind. Den Blechpaketen 41 stehen über einen sehr kleinen Luftspalt beabstandet magnetisierbare Pole 43 gegenüber, die am Innenumfang des Glockenrandes 44 eines Läufers 45 angeordnet sind.

Der Läufer 45 ist über eine zentrale Befestigungsschraube 46 an einem auf die Welle 30 aufgesetzten Wellenzapfen 47 befestigt. Der Läufer 45 weist eine den Wellenzapfen 47 umgebende Hohlwelle 48 auf, wobei der Wellenzapfen 47 und die Hohlwelle 48 gemeinsam in einem Wälz- oder Kugellager 49, das seitlich an ein seitliches Ende der Welle 30 angrenzt, gegenüber dem Ständer 39 gelagert sind, der einen zentralen, ringförmigen Flansch 50 aufweist.

Durch Durchbrüche 51 im Boden des Läufers 45 sind die Befestigungsschrauben 37, 38 des Ständers 39 zugänglich. Der ringförmige Flansch 50 läßt sich zumindest teilweise auf den äußeren Umfang der Lagerhülse 35 aufschieben, so daß dem Elektromotor 40 zusätzlich Stabilität verliehen wird und eine feste Verbindung zwischen dem Tragteil 32 und dem Ständer 39 des Elektromotors 40 zustandekommt, wodurch dem Wälz- oder Kugellager 49 ebenso wie dem Wälz- oder Kugellager 36 die Funktion als Lagerung der Welle 30 zukommt. Gegenüber der in Fig. 1 dargestellten Ausführungsform werden zusätzliche Lager 20, 21 eingespart, die ausschließlich zur Lagerung des Läufers gegenüber dem Ständer dienen. Das Wälz- oder Kugellager 49 hat somit eine Doppelfunktion: Es lagert einerseits den Läufer 45 gegenüber dem Ständer 39 und andererseits die Welle 30 gegenüber dem fest mit dem Tragteil 32 verbundenen Ständer 39. Aufgrund der Einsparung zusätzlicher Lager zwischen dem Ständer 39 und dem Läufer 45 ergibt sich eine besonders preisgünstige Ausführungsform eines Elektromotors, der zudem noch leicht von dem Wellenzapfen 47 abziehbar ist, weil er nur eine kurze Hohlwelle 48 besitzt.

Vorteilhaft an dem Elektromotor 40 ist außerdem, daß der Ständer 39 an einen Kragen 52 besitzt, der über eine Labyrinth-Dichtung 53 von dem Glockenrand 44 des Läufers 45 getrennt ist, so daß ein Eindringen von Schmutzpartikeln in den Bereich zwischen den Polen 43 und den Blechpaketen 41 weitgehend verhindert wird.

Eine formschlüssige, drehfeste Verbindung zwischen dem Läufer 14, 45 und dem Wellenzapfen 11, 47 wird durch eine Profilwellen-, Profilnaben-, eine Paßfeder-, eine Kegel- oder eine Keilnutverbindung gebildet.

Anstelle der Tragteile 5, 32 kann auch vorgesehen werden, daß die Rückwand 2 bzw. 31 genügend verstärkt ausgebildet ist, so daß die Lager 8 und 9 bzw. 36 in ihr ausgebildet sind.

Die oben beschriebene Erfindung läßt sich sowohl bei einer von oben als auch bei einer von vom beschickbaren Waschmaschine einsetzen.

## Patentansprüche

1. Antriebsvorrichtung für eine Waschmaschine mit einer über eine wenigstens annähernd horizontal liegende Welle (11, 30) fliegend gelagerten Wäschetrommel (10), die durch einen an der Rückseite des Laugenbehälters (1, 60) befestigten flachen Elektromotor (12, 40) direkt angetrieben ist, wobei der Ständer (13, 39) mit einem steifen Tragteil (5, 32) verbunden ist und der Ständer (13, 39) und der Läufer (14, 45) des Elektromotors (12, 40) über eine Lagerung (20, 21; 49) miteinander verbunden und gemeinsam aus der Waschmaschine herausnehmbar sind, **dadurch gekennzeichnet, daß** die Welle (11, 30) über Lager (8, 9; 36) entweder in der Rückwand (2, 31) oder innnerhalb des an der Rückwand (2, 31) angebrachten Tragteils (5, 32) gelagert ist und einen aus der Rückwand (2, 31) des Laugenbehälters (1, 60) bzw. dem Tragteil (5, 32) herausragenden Wellenzapfen (11, 47) aufweist, der von einer von dem Läufer (14, 45) des Elektromotors (12, 40) ausgebildeten Hohlwelle (17, 48) umgeben ist und auf den der Ständer (13, 39) und der Läufer (14, 45) des Elektromotors (12, 40) gemeinsam aufschiebbar sind.

2. Antriebsvorrichtung nach Anspruch 1, **dadurch gekennzeichnet, daß** ein Lager (49) des Wellenzapfens (47) gleichzeitig als Lager zwischen dem Ständer (39) und dem Läufer (45) dient.

3. Antriebsvorrichtung nach Anspruch 2, **dadurch gekennzeichnet, daß** das Lager (49) axial an die Lagerhülse (35) des Tragteils (32) angrenzt.

4. Antriebsvorrichtung nach Anspruch 2 oder 3, **dadurch gekennzeichnet, daß** eine zentrale Lagerhülse (50) des Ständers (39) mit ihrem inneren Umfang auf den äußeren Umfang der Lagerhülse (35) des Tragteils (32) aufgeschoben ist.

5. Antriebsvorrichtung nach einem der Ansprüche 1 bis 4, **dadurch gekennzeichnet, daß** der Läufer (14, 45) im Bereich zwischen der Hohlwelle (17, 48) und seiner Umfangspartie eine Vielzahl von Öffnungen aufweist, durch die hindurch der Ständer (13, 39) mit dem Tragteil (5, 32) verbindbar ist.

6. Antriebsvorrichtung nach einem der Ansprüche 1 bis 5, **dadurch gekennzeichnet, daß** der Ständer (13, 39) durch Schrauben mit dem Tragteil (5, 32) verbunden ist.

7. Antriebsvorrichtung nach einem der Ansprüche 1 bis 6, **dadurch gekennzeichnet, daß** der Läufer (14, 45) an seinem Umfang einen zu dem Laugenbehälter (1, 60) weisenden, glockenartigen Flansch (15, 54) aufweist, der an seinem innnenumfang magnetisierbare Pole (16, 43) aufweist, die den Polpaketen (19, 41) des Ständers (13, 39) über einen minimalen Luftspalt gegenüberstehen.

8. Antriebsvorrichtung nach einem der Ansprüche 1 bis 7, **dadurch gekennzeichnet, daß** Teile des Läufers (14, 45) zur Unterstützung einer bei seiner Drehbewegung entstehenden Luftbewegung ausgebildet sind.

9. Antriebsvorrichtung nach einem der Ansprüche 1 bis 7, **dadurch gekennzeichnet, daß** der Elektromotor (12, 40) ein elektronisch kommutierter Gleichstrommotor ist.

10. Antriebsvorrichtung nach Anspruch 9, **dadurch gekennzeichnet, daß** die Polpakete des Ständers (13, 39) aus Dynamoblechen (19, 41) zusammengesetzt sind und Spulen mit den Erregerwicklungen (18, 42) tragen.

11. Antriebsvorrichtung nach einem der Ansprüche 1 bis 8, **dadurch gekennzeichnet, daß** der Elektromotor (12, 40) ein geschalteter Reluktanzmotor ist.

12. Antriebsvorrichtung nach einem der Ansprüche 1 bis 11, **dadurch gekennzeichnet, daß** die zentrierte Verbindung des Läufers (14, 45) mit dem Wellenzapfen (11, 47) durch eine Profilwellen-, Profilnaben-, Paßfeder-, Kegel- oder Keilnutverbindung formschlüssig drehfest ist.

## Claims

1. Drive device for a washing machine, with a laundry drum (10) which is cantilever-mounted by way of an at least approximately horizontally disposed shaft (11, 30) and which is directly driven by a flat electric motor (12, 40) fastened to the rear side of the solution container (1, 60), wherein the stator (13, 39) is connected with a rigid carrier member (5, 32) and the stator (13, 39) and the rotor (14, 45) of the electric motor (12, 40) are connected together by way of a mounting (20, 21; 49) and are removable together from the washing machine, **characterised In that** the shaft (11, 30) is mounted by way of bearings (8, 9; 36) either in the rear wall (2, 31) or within the carrier member (5, 32) mounted at the rear wall (2, 31) and has a shaft spigot (11, 47), which projects out of the rear wall (2, 31) of the solution container (1, 60) or the carrier member (5, 32) and is surrounded by a hollow shaft (17, 48) formed by the rotor (14, 45) of the electric motor (12, 40) and onto which the stator (13, 39) and the rotor (14, 45) of the electric motor (12, 40) can be pushed in common.

2. Drive device according to claim 1, **characterised in that** a bearing (49) of the shaft spigot (47) simultaneously serves as a bearing between the stator (39) and the rotor (45).

3. Drive device according to claim 2, **characterised in that** bearing (49) axially adjoins the bearing sleeve (35) of the carrier member (32).

4. Drive device according to claim 2 or 3, **characterised in that** a central bearing sleeve (50) of the stator (39) is pushed by the inner circumference thereof onto the outer circumference of the bearing sleeve (35) of the carrier member (32).

5. Drive device according to one of claims 1 to 4, **characterised in that** the rotor (14, 45) has in the region between the hollow shaft (17, 48) and its circumferential part a plurality of openings by way of which the stator (13, 39) is connectible with the carrier member (5, 32).

6. Drive device according to one of claims 1 to 5, **characterised in that** the stator (13, 39) is connected with the carrier member (5, 32) by screws.

7. Drive device according to one of claims 1 to 6, **characterised in that** the rotor (14, 45) has at the circumference thereof a bell-like flange (15, 54), which faces towards the solution container (1, 60) and which has at the inner circumference thereof magnetisable poles (16, 43) disposed opposite the pole lamination stacks (19, 41) of the stator (13, 39) by way of a minimum air gap.

8. Drive device according to one of claims 1 to 7, **characterised in that** parts of the rotor (14, 45) are constructed to assist an air movement created by its rotational movement.

9. Drive device according to one of claims 1 to 7, **characterised in that** the electric motor (12, 40) is an electronically commutated direct current motor.

10. Drive device according to claim 9, **characterised in that** the pole lamination stacks of the stator (13, 39) are assembled from core sheets (19, 41) and carry coils with the excitation windings (18, 42).

11. Drive device according to one of claims 1 to 8, **characterised in that** the electric motor (12, 40) is a switched reluctance motor.

12. Drive device according to one of claims 1 to 11, **characterised in that** the centred connection of the rotor (14, 45) with the shaft spigot (11, 47) is rotationally fast and mechanically positive by a profiled shaft connection, profiled hub connection, fit spring connection, cone connection or wedge groove connection.

## Revendications

1. Dispositif d'entraînement pour machine à laver avec un tambour à linge (10), logé de façon mobile au moyen d'un axe (11, 30) se trouvant approximativement à l'horizontale, ledit tambour à linge est actionné directement par un moteur électrique plat (12, 40) fixé sur la paroi arrière du bac à lessive (1, 60), dans lequel le stator (13, 39) est relié à une partie portante rigide (5, 32) et le stator (13, 39) et le rotor (14, 45) du moteur électrique (12, 40) sont reliés ensemble par un logement (20, 21 ; 49) et peuvent être enlevés en commun de la machine à laver, **caractérisé en ce que** l'axe (11, 30) est logé par des paliers (8, 9 ; 36) soit dans la paroi arrière (2, 31), soit à l'intérieur de la partie portante (5, 32) agencée sur la paroi arrière (2, 31) et présente un tourillon d'arbre (11, 47), faisant saillie de la paroi arrière (2, 31) du bac à lessive (1, 60) resp. de la partie portante (5, 32), qui est entouré par un arbre creux (17, 48) formé par le rotor (14, 45) du moteur électrique (12, 40) et sur lequel le stator (13, 39) et le rotor (14, 45) du moteur électrique (12, 40) peuvent être poussés en commun.

2. Dispositif d'entraînement selon la revendication 1, **caractérisé en ce qu'**un support (49) du tourillon d'arbre (47) sert simultanément de palier entre le stator (39) et le rotor (45).

3. Dispositif d'entraînement selon la revendication 2, **caractérisé en ce que** le palier (49) est adjacent axialement au manchon de palier (35) de la partie portante (32).

4. Dispositif d'entraînement selon la revendication 2 ou 3, **caractérisé en ce qu'**un manchon de palier central (50) du stator (39) est poussé avec sa périphérie interne sur la périphérie externe du manchon de palier (35) de la partie portante (32).

5. Dispositif d'entraînement selon l'une des revendications 1 à 4, **caractérisé en ce que** le rotor (14, 15) dans la zone située entre l'arbre creux (17, 48) et sa partie périphérique présente une multiplicité d'ouvertures à travers lesquelles le stator (13, 39) peut être relié à la partie portante (5, 32).

6. Dispositif d'entraînement selon l'une des revendications 1 à 5, **caractérisé en ce que** le stator (13, 39) est relié par des vis à la partie portante (5, 32).

7. Dispositif d'entraînement selon l'une des revendications 1 à 6, **caractérisé en ce que** le rotor (14, 45) présente sur sa périphérie une bride (15, 54) de type cloche, se dirigeant vers le bac à lessive (1, 60) qui présente sur sa périphérie interne des pôles magnétisables (16, 43) qui font face aux empilages de tôles polaires (19, 41) du stator (13, 39) sur un entrefer minimal.

8. Dispositif d'entraînement selon l'une des revendications 1 à 7, **caractérisé en ce que** des parties du rotor (14, 45) sont conçues pour soutenir un souffle se formant lors de son mouvement de rotation.

9. Dispositif d'entraînement selon l'une des revendications 1 à 7, **caractérisé en ce que** le moteur électrique (12, 40) est un moteur à courant continu commuté électroniquement.

10. Dispositif d'entraînement selon la revendication 9, **caractérisé en ce que** les empilages de tôles polaires du stator (13, 39) sont composés de tôles pour dynamo (19, 41) et portent des bobines avec les enroulements inducteurs (18, 42).

11. Dispositif d'entraînement selon l'une des revendications 1 à 8, **caractérisé en ce que** le moteur électrique (12, 40) est un moteur à réluctance.

12. Dispositif d'entraînement selon l'une des revendications 1 à 11, **caractérisé en ce que** la liaison centrée du rotor (14, 45) avec le tourillon d'arbre (11, 47) est résistante à la torsion par engagement positif grâce à une liaison à axe profilé, à moyeu profilé, à ressort d'ajustage, conique ou à rainure de clavette.
